# FASCICULE DE BREVET EUROPEEN

(11) **EP 2 864 594 B1**
(45) Date de publication et mention de la délivrance du brevet: **17.01.2018**
(21) Numéro de dépôt: 13744617.5
(22) Date de dépôt: 24.06.2013
(51) Int. Cl.: F01D 7/00, F04D 29/36, B64C 11/06

(54) **SOUFFLANTE A CALAGE VARIABLE PAR ROTATION DIFFERENTIELLE DES DISQUES DE SOUFFLANTE**
BLÄSER MIT VARIABLER EINSTELLUNG DER SCHAUFELN MITTELS DIFFERENTIELLER ROTATION DER ROTORSCHEIBEN DES BLÄSERS
FAN HAVING A VARIABLE BLADE SETTING BY MEANS OF DIFFERENTIAL ROTATION OF THE FAN DISKS

(30) Priorité: 25.06.2012 FR 1255998
(43) Date de publication de la demande: 29.04.2015
(73) Titulaire: Safran Aircraft Engines, 75015 Paris (FR)
(72) Inventeur: GALLET, François, F-77550 Moissy-Cramayel cedex (FR)
(74) Mandataire: Gevers & Orès
(86) Numéro de dépôt international: PCT/FR2013/051470
(87) Numéro de publication internationale: WO 2014/001701

(56) Documents cités:
- EP-A1- 0 545 750
- EP-A2- 1 961 919
- WO-A2-2006/086342
- WO-A2-2009/142973
- GB-A- 2 199 378

## Description

Le domaine de la présente invention est celui des turbomachines et, plus particulièrement celui des turboréacteurs à fort taux de dilution, ou turbofans.

Une turbomachine pour un aéronef comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par un arbre, formant ainsi, par exemple, un corps haute pression et un corps basse pression.

Le premier étage de compression, ou soufflante, dans le cas d'un turbofan se caractérise généralement par un faible taux de compression et par une marge au pompage, lorsqu'il est en fonctionnement au sol, qui est relativement faible. Le phénomène de pompage correspond à un décrochage du flux d'air sur les pales des aubes et il provoque un phénomène d'instabilité dans l'écoulement qui peut aboutir à une extinction ou même, à un endommagement du moteur. Il s'ensuit des risques de mauvais fonctionnement du moteur qui pourraient survenir lors du roulage de l'avion, qu'il convient d'éviter. Pour cela plusieurs possibilités ont été mises en oeuvre. Il est ainsi possible d'utiliser une tuyère à section variable et de l'ouvrir au sol pour augmenter la marge au pompage ou bien d'utiliser une soufflante à calage variable, et d'ouvrir ce calage au sol.

Les inconvénients rencontrés avec un dispositif d'ouverture de la section de tuyère sont la masse additionnelle et la difficulté de la mise au point. Par ailleurs, le gain apporté reste limité pour des raisons de réalisation technologique et il est d'autant plus réduit que le taux de dilution du turboréacteur est élevé, ce qui est le cas le plus fréquent avec les turbofans modernes. Dans le cas d'un dispositif de calage variable pour ses aubes, il est courant de modifier le calage des pales de ces aubes au sol pour améliorer la marge au pompage ou encore au cours du vol afin de faire évoluer la poussée du moteur et ainsi optimiser le rendement de l'hélice, en fonction de la vitesse de l'aéronef. Des dispositifs multiples ont donc été imaginés pour faire varier ce calage des pales ; ils comportent généralement une mise en rotation de l'aube autour de son axe principal, par l'intermédiaire de pignons coniques qui sont situés sous le pied de l'aube et qui coopèrent avec des pignons coniques d'un système de commande. Si le principe de cette solution est déjà éprouvé, celle-ci se caractérise toutefois par la présence d'un moyeu qui est relativement volumineux pour pouvoir y loger les pignons coniques, ce qui entraîne un diamètre plus important pour la soufflante et une pénalité associée en termes de masse et de traînée en vol. De plus elle se caractérise par une aérodynamique en pied de pale qui est difficile à optimiser et par une architecture mécanique complexe afin d'assurer la mise en drapeau de la soufflante en cas de panne du turboréacteur.
D'autres dispositifs ont été proposés, comme ceux décrits dans les demandes de brevet WO 2009/142973 et WO 2006/086342 ou EP 1961919 qui montrent des attaches d'aubes de soufflantes montées sur deux disques, ceux-ci étant mobiles l'un par rapport à l'autre autour de l'axe de rotation du turboréacteur. Ces dispositifs sont relativement complexes à réaliser car ils mettent en oeuvre trois dispositifs pour assurer de façon séparée chacune des trois fonctions, de rétention de l'aube, de guidage de l'aube en rotation autour de son axe et de changement de son calage. De plus ces dispositifs nécessitent soit des supports souples de pieds de pale, soit des pivots montés sur roulements pour prendre en compte les diverses rotations, ce qui est difficilement compatible de la mécanique des pales de soufflante, qui doit prendre en compte les efforts élevés nécessaires pour le maintien des aubes.
La présente invention a pour but de remédier à ces inconvénients en proposant un dispositif permettant de modifier le calage des aubes d'une soufflante de turbofan qui ne présente pas les inconvénients de l'art antérieur et, notamment, qui soit simple mécaniquement et peu volumineux.

A cet effet, l'invention a pour objet un rotor de soufflante pour turbomachine comportant un arbre et au moins deux disques montés sur ledit arbre pour assurer le maintien d'un même jeu d'aubes mobiles en rotation autour de l'axe de rotation dudit arbre, au moins un premier disque étant monté de façon mobile sur ledit arbre de façon à pouvoir générer un écart angulaire avec ledit second disque, au moins un des deux disques étant conformé pour recevoir au moins un moyen d'attache de chaque aube, la liaison entre ledit disque et ledit moyen permettant une rotation dudit moyen autour d'un axe longitudinal de l'aube, caractérisé en ce que ladite liaison est une liaison rotulante, mobile tangentiellement et axialement.
La faculté de faire tourner un disque par rapport à l'autre permet en attachant à chacun d'eux un point différent sur le pied des aubes mobiles, de faire varier le calage de celles-ci. La présence d'une liaison rotulante permet de prendre en compte les décalages tant tangentiels qu'axiaux des points d'attache des aubes sur les deux disques, et ce, à l'aide d'une liaison éprouvée sur le plan mécanique qui soit apte à supporter les efforts importants associés à la retenue d'aubes de soufflante.

Avantageusement les deux disques sont conformés pour recevoir ledit moyen d'attache au moyen d'une liaison rotulante, mobile tangentiellement et axialement.

Dans un mode particulier de réalisation ledit disque comporte une chape traversée par un alésage muni de ladite liaison rotulante, ledit moyen d'attache des aubes étant un axe traversant ledit alésage.

De façon préférentielle le second disque est fixe en rotation par rapport audit arbre, le premier disque étant fixé sur un moyen d'actionnement comprenant une partie fixe liée audit arbre et une partie mobile, ladite partie mobile étant mobile en rotation autour de l'axe de rotation dudit arbre.

De façon plus préférentielle le moyen d'actionnement est un vérin rotatif. Cette solution présente l'avantage d'une grande compacité et évite que le moyeu du dispositif de commande du calage soit trop volumineux.

Avantageusement le vérin rotatif comporte un axe s'étendant selon l'axe de rotation dudit arbre auquel il est rigidement fixé, et une enceinte mobile en rotation autour dudit axe, ledit premier disque étant monté sur ladite enceinte.

Préférentiellement l'enceinte du vérin rotatif comporte deux chambres destinées à recevoir un liquide hydraulique pour la mise en rotation dudit premier disque par rapport au second.
Dans un mode particulier de réalisation le rotor comporte une bague de guidage en rotation positionnée entre les deux disques pour assurer la permanence de leur calage axial respectif. L'invention porte également sur une module de soufflante de turboréacteur double flux à fort taux de dilution comportant un rotor de soufflante tel que décrit ci-dessus et un turboréacteur double flux comportant un tel module de soufflante.

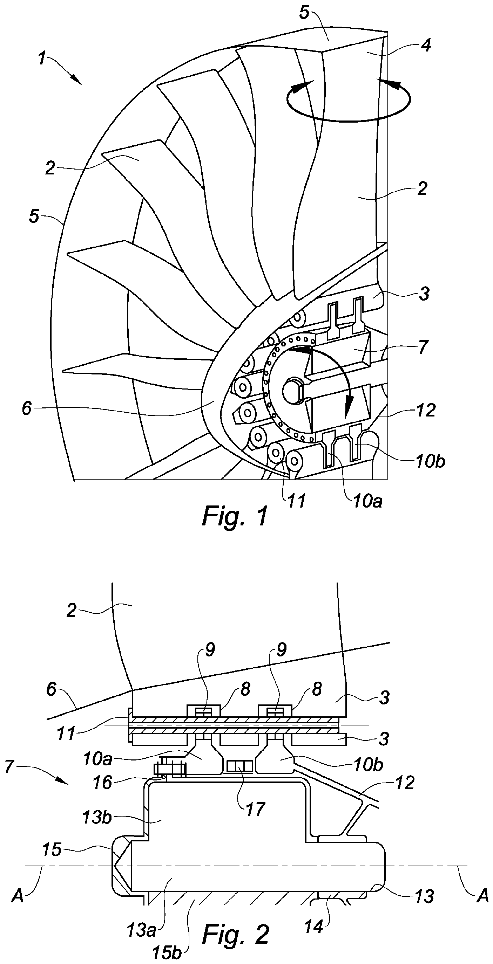

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
Sur ces dessins :
- la figure 1 est une vue en perspective d'une soufflante de turboréacteur avec des aubes dont le calage peut être modifié par un dispositif de commande selon l'invention ;
- la figure 2 est une vue en coupe axiale de la soufflante de la figure 1, et
- les figures 3, 4 et 5 sont des vues détaillées du dispositif de commande du calage des aubes de la soufflante de la figure 1, celles-ci étant respectivement en configuration de vol, en drapeau et en réverse.
En se référant à la figure 1, on voit une soufflante 1 d'un turboréacteur à fort taux de dilution. Elle est constituée par une pluralité d'aubes 2 réparties régulièrement sur la circonférence de son arbre porteur et qui s'étendent entre un pied de pale 3 attaché sur un moyeu central et une tête de pale 4 qui se déplace le long d'une virole extérieure 5 formant un canal externe pour la veine d'air entraînée par la soufflante. Les pieds de pale sont, quant à eux, enfermés dans un cône 6 qui forme le canal interne de ladite veine d'air. Les aubes 2, qui sont représentées sur cette figure dans la position du drapeau, c'est-à-dire avec leur corde alignée dans le lit du vent, sont mobiles en rotation autour de leur axe longitudinal, sous l'action d'un mécanisme d'actionnement 7 qui sera mieux décrit en référence à la figure 2.
Sur la figure 2 on voit la partie basse d'une aube 2 dont le pied de pale 3 est creusé de deux rainures circonférentielles 8 dans lesquelles viennent s'insérer les extrémités radialement externes de deux disques de soufflante 10a et 10b qui sont positionnés côte à côte le long de l'axe de rotation A du turboréacteur. Ces extrémités radiales ont la forme de chapes 9 dans l'alésage desquelles passe un axe de fixation 11 de l'aube 2. Le pied de pale 3 présente en conséquence une forme cylindrique, qui est alignée selon l'axe longitudinal A du moteur, et qui est traversée en son centre par un alésage pour permettre d'y loger ledit axe de fixation. La liaison entre l'axe 11 et la chape 9 pour chacun des deux disques est une liaison rotulante, permettant ainsi à l'axe 11 et, par conséquent au pied de pale 3, de s'orienter dans une direction qui n'est pas strictement perpendiculaire à la direction radiale des disques et qui est, plus généralement, décalée angulairement, dans un plan tangentiel, par rapport à celle de l'axe de rotation A du moteur. Cette liberté de mouvement en rotation donnée aux pieds de pale 3 permet, en décalant l'orientation de l'axe de fixation 11, de faire varier le calage des aubes 2 de la soufflante 1.
Le choix d'une liaison rotulante entre l'axe 11 et les chapes 9 permet, outre le déplacement tangentiel de l'axe 11 pour assurer la variation du calage, le déplacement axial qui résulte de la rotondité des disques et du fait que le point de l'axe 11 au niveau de la chape du disque mobile se trouve, en projection sur le plan radial passant par la chape du disque fixe, radialement plus proche de l'axe de rotation du moteur que le point de l'axe 11 au niveau de la chape du disque fixe.

Mécaniquement on obtient ainsi un dispositif d'attache des aubes qui prend en compte tous les déplacements consécutifs à la rotation relative des disques de soufflante, grâce à une simple liaison rotulante, sans avoir besoin de dispositifs plus compliqués comme une attache de disque flexible ou une présence de roulements. On obtient par de simples pièces métalliques mobiles une grande simplicité et une bonne prise en compte des efforts de maintien des aubes. Ce dispositif concentre en une seule liaison la réalisation des trois fonctions, de retenue des aubes, de guidage en rotation des aubes autour de leur axe longitudinal et de commande du changement de leur calage.

Il convient de noter que, au cours d'un changement de pas de la soufflante, la distance entre les deux moyens rotulants de la chape 9 varie. En conséquence, au moins l'une des deux chapes doit être montée glissante sur l'axe de fixation 11, de façon à ce que cette distance puisse varier. En outre, les rainures 8 doivent être suffisamment larges pour que les chapes 9 puissent se déplacer autant que nécessaire.

Si, en revanche, l'on souhaite que les chapes 9 soient bloquées en translation sur l'axe de fixation 11, il est nécessaire que la liaison au niveau de la bague 17 soit une liaison pivot glissant, de façon que l'écartement axial entre les disques 10a et 10b soit variable.

Les deux disques 10a et 10b sont portés par l'arbre de soufflante 12 du turboréacteur de la façon suivante. En premier lieu, le second disque 10b, représenté ici comme le disque qui est positionné le plus en aval, sans que cette configuration soit impérative, est porté, de façon classique, directement par l'arbre de soufflante 12. Il lui est lié via une liaison, par exemple, du type boulonnée et il tourne concomitamment avec lui. En revanche et en second lieu, le disque amont ou premier disque 10a est relié à cet arbre de soufflante par l'intermédiaire du mécanisme d'actionnement 7 qui est réalisé sous la forme d'un vérin rotatif. D'autres dispositifs d'actionnement peuvent être envisagés comme, par exemple, une vis à bille ou tout autre moyen de décalage angulaire d'un disque par rapport à un autre, pour autant qu'il assure le maintien de la position relative des deux disques après leur décalage.

Le vérin rotatif 7 comprend une partie, dite fixe, 13 qui tourne avec l'arbre de soufflante 12 auquel elle est solidarisée en rotation par un moyen d'entraînement 14, par exemple à cannelures pour permettre le démontage par l'avant du mécanisme 7. Cette partie fixe 13 a classiquement la forme d'un axe cylindrique 13a s'étendant axialement selon l'axe de rotation A du turboréacteur et à partir duquel s'étend radialement une palette 13b sur laquelle peut s'exercer la pression d'un fluide hydraulique pour assurer la commande en position du vérin rotatif. La partie fixe 13 est enfermée dans une enceinte, dite partie mobile 15, de forme également cylindrique, qui enveloppe sans jeu l'axe 13a et la palette 13b et qui peut tourner par rapport à ladite partie fixe 13 autour de l'axe 13a de celle-ci. Cette enceinte hydraulique 15 est séparée en deux par une paroi radiale 15b qui s'étend seulement selon un rayon, de façon à générer de part et d'autre de la palette 13b, deux chambres dans lesquelles peut être envoyé un liquide hydraulique sous deux pressions hydrauliques différentes de façon à piloter la rotation du vérin rotatif.

L'enceinte mobile 15 est par ailleurs porteuse, sur sa partie extérieure, d'une bride 16 de fixation qui la solidarise avec le premier disque de soufflante 10a et qui permet, en commandant la position angulaire de la partie mobile 15 par rapport à la partie fixe 13, de commander le décalage angulaire de ce premier disque 10a par rapport au second disque 10b. Enfin une bague 17 de guidage en rotation du premier disque 10a est positionnée entre les deux disques pour assurer le guidage en rotation du disque 10a par rapport au disque 10b.

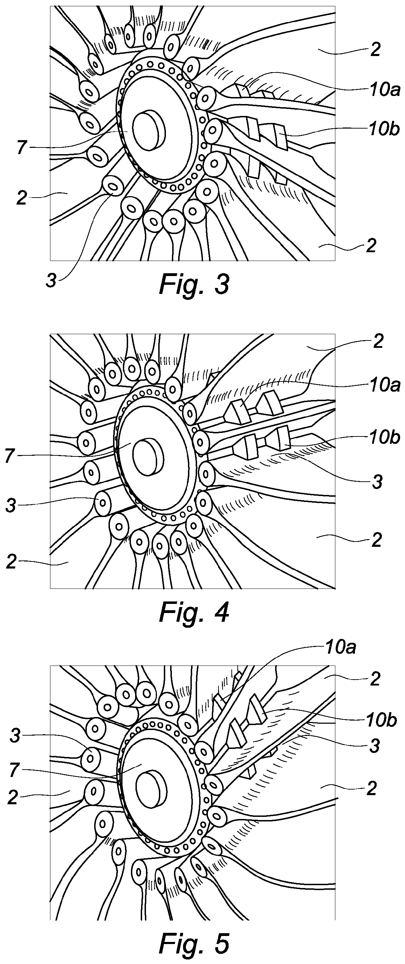

La figure 3 montre la position des aubes 2 en configuration de vol, c'est à dire orientées avec un angle d'incidence, dit positif, par rapport à la direction d'arrivée de l'air sur la soufflante 1, celui-ci rencontrant l'aube sur son intrados. Le premier disque 10a est déplacé dans le sens de rotation des aubes par rapport au second disque 10b, ce qui décale le bord d'attaque des aubes dans le sens de la rotation alors que leur bord de fuite reste retenu par le second disque. L'écart angulaire obtenu ainsi entre les deux disques par l'intermédiaire du mécanisme d'actionnement 7, est défini de façon à donner à tout instant aux aubes l'angle d'incidence qui est adapté au bon fonctionnement de la soufflante dans la configuration de vol considérée.

La figure 4 montre la position des aubes 2 dans la position de drapeau, c'est à dire que leur corde est alignée avec la direction de l'air arrivant sur la soufflante. Par rapport à la position de la figure 3 le premier disque 10a a été déplacé par le mécanisme d'actionnement 7, dans le sens inverse de celui de la rotation des aubes, par rapport au second disque 10b.

Enfin la figure 5 montre la position des aubes dans une position de réverse, c'est-à-dire dans une position où elles dirigent le flux d'air qui les traverse vers l'amont du moteur. Elles ont alors un angle d'incidence négatif vis-à-vis du flux d'air, qui résulte du déplacement du premier disque 10a dans un sens opposé à celui de la rotation des aubes, avec une ampleur qui l'amène au-delà de la position correspondant au drapeau.

On va maintenant décrire le fonctionnement du mécanisme de changement du calage des aubes 2 selon l'invention.

En fonctionnement la soufflante 1 du turboréacteur est en rotation autour de son axe A, le calage des aubes étant dans une position donnée qui correspondant a priori à la position la mieux adaptée au cas de fonctionnement en vol considéré. Le rotor basse pression du turboréacteur entraîne en rotation l'arbre de soufflante 12 auquel sont rattachés rigidement, d'une part, le second disque 10b et, d'autre part, l'axe 13a de la partie fixe 13 du mécanisme d'actionnement 7 par l'intermédiaire du moyen d'entraînement 14.

En régime permanent, les pressions dans les deux chambres de la partie mobile 15 sont égales et la palette 13b est dans une position fixe par rapport à cette partie mobile. L'enceinte 15 de la partie mobile a ainsi la même vitesse de rotation que la partie fixe 13. Du fait de la liaison rigide assurée par la bride 16 entre l'enceinte 15 et le premier disque 10a, ce premier disque tourne à la même vitesse que cette partie fixe et, par suite, que l'arbre de soufflante 12 et que le second disque 10b. En conséquence toutes les pièces mobiles tournent à la même vitesse et le calage des aubes 2 reste constant au cours du fonctionnement du moteur en vol, en l'absence de sollicitation par le mécanisme d'actionnement 7.

Lorsque l'on cherche à modifier le calage des aubes, que ce soit par une action volontaire du pilote pour passer le moteur en drapeau ou bien en réverse, ou que ce soit par la régulation du moteur qui cherche à adapter le calage des aubes au fonctionnement présent du moteur, une surpression hydraulique est envoyée dans une des deux chambres de l'enceinte 15, la chambre considérée étant celle qui correspond à un actionnement de la palette 13b dans le sens dans lequel on veut modifier le calage. L'envoi de cette surpression modifie l'équilibre des pressions entre les deux chambres et fait tourner la partie mobile 15 autour de l'axe principal A, par réaction sur la palette 13b de la partie fixe 13. Ce faisant la partie mobile 15 entraîne, par l'intermédiaire de la bride 16, le premier disque 10a dans une rotation relative par rapport au second disque 10b.

Le décalage en rotation relative des deux disques entraîne la rotation de l'axe de fixation 11 des aubes 2 et le déplacement, dans un sens, du bord d'attaque de celles-ci par rapport à leur bord de fuite, ce qui procure le changement de calage recherché. Le montage sur rotule de l'axe de fixation 11 dans les chapes 9 des deux disques permet sa rotation et donc celle de l'aube autour de son axe longitudinal pour générer la modification de calage recherchée.

Par rapport aux systèmes à pivots conventionnels, les avantages du dispositif décrit sont les suivants :
- la compacité de ce système permet de concevoir des soufflantes avec des rapports de moyeu identiques à ceux des turbofans actuels ; il n'y a pas d'augmentation de l'encombrement moteur, et donc pas de pénalité en termes de trainée et de masse.
- on peut avoir le même nombre de pales que sur un turbofan conventionnel, et donc le même rendement que les soufflantes actuelles.
- la veine interne peut être réalisée de façon conique, de façon à ce que l'aérodynamique du pied de pale bénéficie d'un effet de centrifugation.
- la rétention centripète des aubes se fait par une structure naturellement duale, avec deux chapes et deux disques de soufflante.
- enfin, les efforts centrifuges ont tendance à amener naturellement les aubes dans la position du drapeau, en cas de perte de pression dans le système de commande de leur calage.

Par ailleurs la maintenance de la soufflante reste simple puisque ses divers éléments sont facilement démontables. Il suffit, d'une part, de retirer les axes qui les relient aux disques de soufflante pour démonter les aubes 2 et, d'autre part, de démonter le cône 6 pour avoir accès au mécanisme d'actionnement 7, qui s'extrait par l'avant, suite à un simple démontage de la bride 16.

Le dispositif décrit nécessite toutefois des plateformes entre les aubes qui puissent s'adapter au jeu existant et qui est variable du fait du calage évolutif des aubes. Pour cela diverses solutions sont envisageables, comme des plateformes déformable en matériau élastomère, des plateformes articulées ou encore des plateformes à recouvrement.

## Revendications

1. Rotor de soufflante pour turbomachine comportant un arbre (12) et au moins deux disques (10a, 10b) montés sur ledit arbre pour assurer le maintien d'un même jeu d'aubes (2) mobiles en rotation autour de l'axe de rotation dudit arbre, au moins un premier disque (10a) étant monté de façon mobile sur ledit arbre de façon à pouvoir générer un écart angulaire avec ledit second disque (10b), au moins un des deux disques étant conformé pour recevoir au moins un moyen d'attache de chaque aube (11), la liaison entre ledit disque et ledit moyen permettant une rotation dudit moyen autour d'un axe longitudinal de l'aube, **caractérisé en ce que** ladite liaison est une liaison rotulante, mobile tangentiellement et axialement.

2. Rotor selon la revendication 1 dans lequel les deux disques sont conformés pour recevoir ledit moyen d'attache au moyen d'une liaison rotulante, mobile tangentiellement et axialement.

3. Rotor selon l'une des revendications 1 ou 2 dans lequel ledit disque comporte une chape (9) traversée par un alésage muni de ladite liaison rotulante, ledit moyen d'attache des aubes étant un axe (11) traversant ledit alésage.

4. Rotor selon l'une des revendications 1 à 3 dans lequel le second disque est fixe en rotation par rapport audit arbre (12), le premier disque étant fixé sur un moyen d'actionnement (7) comprenant une partie fixe liée audit arbre (12) et une partie mobile, ladite partie mobile étant mobile en rotation autour de l'axe de rotation dudit arbre.

5. Rotor selon la revendication 4 dans lequel le moyen d'actionnement est un vérin rotatif (7).

6. Rotor selon la revendication 5 dans lequel le vérin rotatif comporte un axe (13a) s'étendant selon l'axe de rotation dudit arbre auquel il est rigidement fixé, et une enceinte (15) mobile en rotation autour dudit axe (13a), ledit premier disque (10a) étant monté sur ladite enceinte.

7. Rotor selon la revendication 6 dans lequel l'enceinte (15) du vérin rotatif (7) comporte deux chambres destinées à recevoir un liquide hydraulique pour la mise en rotation dudit premier disque par rapport au second.

8. Rotor selon l'une des revendications 1 à 7 comportant une bague de guidage en rotation (17) positionnée entre les deux disques pour assurer la permanence de leur calage axial respectif.

9. Module de soufflante de turboréacteur double flux à fort taux de dilution comportant un rotor de soufflante selon l'une des revendications 1 à 8.

10. Turboréacteur double flux comportant un module de soufflante selon la revendication précédente.

## Patentansprüche

1. Gebläserotor für eine Turbomaschine, umfassend eine Welle (12) und mindestens zwei Scheiben (10a, 10b), die auf der Welle befestigt sind, um das Aufrechterhalten eines gleichen Spiels von Schaufeln (2), die um die Drehachse der Welle drehbar sind, zu gewährleisten, wobei mindestens eine erste Scheibe (10a) auf der Welle derart beweglich angebracht ist, um eine Winkelabweichung mit der zweiten Scheibe (10b) zu erzeugen, wobei mindestens eine der zwei Scheiben ausgebildet ist, um mindestens ein Befestigungsmittel von jeder Schaufel (11) aufzunehmen, wobei die Verbindung zwischen der Scheibe und dem Mittel eine Drehung des Mittels um eine Längsachse der Schaufel ermöglicht, **dadurch gekennzeichnet, dass** die Verbindung eine Drehverbindung ist, die tangential und axial bewegbar ist.

2. Rotor nach Anspruch 1, wobei die zwei Scheiben ausgebildet sind, um das Befestigungsmittel mittels einer Drehverbindung, die tangential und axial bewegbar ist, aufzunehmen.

3. Rotor nach einem der Ansprüche 1 oder 2, wobei die Scheibe ein Gabelstück (9) aufweist, das von einer Bohrung durchquert ist, die mit der Drehverbindung versehen ist, wobei das Befestigungsmittel der Schaufeln eine Achse (11) ist, die die Bohrung durchquert.

4. Rotor nach einem der Ansprüche 1 bis 3, wobei die zweite Scheibe drehfest in Bezug auf die Welle (12) ist, wobei die Scheibe auf einem Betätigungsmittel (7) befestigt ist, das einen festen Teil, der mit der Welle (12) verbunden ist, und einen beweglichen Teil aufweist, wobei der bewegliche Teil drehbeweglich um die Drehachse der Welle ist.

5. Rotor nach Anspruch 4, wobei das Betätigungsmittel ein Drehzylinder (7) ist.

6. Rotor nach Anspruch 5, wobei der Drehzylinder eine Achse (13a), die sich entlang der Drehachse der Welle erstreckt, an der sie starr befestigt ist, und ein Gehäuse (15) aufweist, das drehbeweglich um die Achse (13a) ist, wobei die erste Scheibe (10a) an dem Gehäuse befestigt ist.

7. Rotor nach Anspruch 6, wobei das Gehäuse (15) des Drehzylinders (7) zwei Kammern aufweist, die dazu bestimmt sind, eine Hydraulikflüssigkeit zum in Drehung Versetzen der ersten Scheibe gegenüber der zweiten Scheibe aufzunehmen.

8. Rotor nach einem der Ansprüche 1 bis 7, umfassend einen Ring zur Rotationsführung (17), der zwischen den zwei Scheiben angeordnet ist, um die Beständigkeit ihrer jeweiligen axialen Verkeilung zu gewährleisten.

9. Gebläsemodul eines Zweikreisturbotriebwerks mit hohem Verdünnungsverhältnis, umfassend einen Gebläserotor nach einem der Ansprüche 1 bis 8.

10. Zweikreisturbotriebwerk, umfassend ein Gebläsemodul nach dem vorhergehenden Anspruch.

## Claims

1. Fane rotor for a turbine engine comprising a shaft (12) and at least two discs (10a, 10b) which are mounted on said shaft in order to ensure the retention of the same set of movable vanes (2) during rotation about the rotation axis of said shaft, at least a first disc (10a) being mounted in a movable manner on said shaft in order to be able to generate angular spacing with respect to said second disc (10b), at least one of the two discs being formed to receive at least one fixing means (11) for each vane, the connection between said disc and said means allowing rotation of said means about a longitudinal axis of the vane, **characterised in that** said connection is a ball-and-socket joint which is tangentially and axially movable.

2. Rotor according to claim 1, wherein the two discs are formed in order to receive said fixing means in the form of a ball-and-socket joint which is tangentially and axially movable.

3. Rotor according to either claim 1 or claim 2, wherein said disc comprises a cap (9), through which a hole provided with said ball-and-socket joint extends, said fixing means for the vanes being an axle (11) which extends through said hole.

4. Rotor according to any of claims 1 to 3, wherein the second disc is fixed in terms of rotation in relation to said shaft (12), the first disc being fixed to an actuation means (7) which comprises a fixed portion which is connected to said shaft (12) and a movable portion, said movable portion being movable in terms of rotation about the rotation axis of said shaft.

5. Rotor according to claim 4, wherein the actuation means is a rotary actuator (7).

6. Rotor according to claim 5, wherein the rotary actuator comprises an axle (13a) which extends in accordance with the rotation axis of said shaft, to which it is rigidly fixed, and a vessel (15) which is movable in terms of rotation about said axle (13a), said first disc (10a) being mounted on said vessel.

7. Rotor according to claim 6, wherein the vessel (15) of the rotary actuator (7) comprises two chambers which are intended to receive a hydraulic liquid for the rotation of said first disc relative to the second disc.

8. Rotor according to any of claims 1 to 7, comprising a rotation guiding ring (17) which is positioned between the two discs in order to ensure that the respective axial pitches thereof are in a permanent state.

9. Fan module of a bypass turbojet engine having a high dilution rate, comprising a fan rotor according to any of claims 1 to 8.

10. Bypass turbojet engine comprising a fan module according to the preceding claim.
